# EUROPEAN PATENT APPLICATION

(11) **EP 2 886 233 A1**
(43) Date of publication of application: **24.06.2015**
(21) Application number: 14197585.4
(22) Date of filing: 12.12.2014
(51) Int. Cl.: B23D 59/00, B27B 9/02

(54) **Power circular saw**

(30) Priority: 19.12.2013 JP 2013262694
(71) Applicant: Panasonic Intellectual Property Management Co., Ltd., Osaka-shi, Osaka 540-6207 (JP)
(72) Inventor: Matsumoto, Hiroshi, Chuo-ku,, Osaka 540-6207 (JP)
(74) Representative: Appelt, Christian W.

(57) **Abstract**

A power circular saw (1) includes a circular saw blade (7) rotated by a motor (6), a plate-line base (8), and a protection cover (11). The base (8) includes a front end, a rear end, and an opening (10) located between the front end and the rear end. The opening (10) receives a portion of the circular saw blade (7). The protection cover (11) covers a saw-tooth line of the circular saw blade (7) above the base (8). The protection cover (11) includes a guide portion (11b) that is located at a position corresponding to a plane or the saw-tooth line of the circular saw blade (7) and projects toward the front end of the base (8).

## Description

The present invention relates to a power circular saw, particularly, to the improvement of a protection cover for a power circular saw.

Japanese Laid-Open Patent Publication No. 9-164508 discloses a power circular saw that includes a circular saw blade and a protection cover, which covers the upper side of the circular saw blade so that the circular saw blade is not exposed toward an operator. In some power circular saws, the protection cover includes an opening or a transparent plate used to align the circular saw blade with a cutting guide line marked on a workpiece or a cutting subject.

However, a protection cover including a large opening would increase the amount of dispersed sawdust. Thus, this is not preferable. Also, a transparent plate of a protection cover may become clouded or opaque due to the deposition of sawdust, which may be burnt iron powder. This would conceal the blade edge.

It is an object of the present invention to provide a power circular saw that allows for alignment of a blade edge and a workpiece in a further ensured manner.

In one aspect of the present invention, a power circular saw includes a circular saw blade rotated by a motor, a plate-like base, and a protection cover. The base includes a front end, a rear end, and an opening located between the front end and the rear end. The opening receives a portion of the circular saw blade. The protection cover covers a saw-tooth line of the circular saw blade above the base. The protection cover includes a guide portion that is located at a position corresponding to a plane or the saw-tooth line of the circular saw blade and projects toward the front end of the base.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a perspective view illustrating one embodiment of a power circular saw;
Fig. 2 is a perspective view of the power circular saw of Fig. 1 as viewed from a different angle;
Fig. 3 is a partial plan view of the power circular saw of Fig. 1;
Fig. 4 is a perspective view illustrating a first example of a power circular saw;
Fig. 5 is a partial plan view of the power circular saw of Fig. 4;
Fig. 6 is a perspective view illustrating a second example of a power circular saw;
Fig. 7 is a partial plan view of the power circular saw of Fig. 6; and
Fig. 8 is a perspective view of the power circular saw of Fig. 6 as viewed from a different angle.

One embodiment of a power circular saw will now be described.

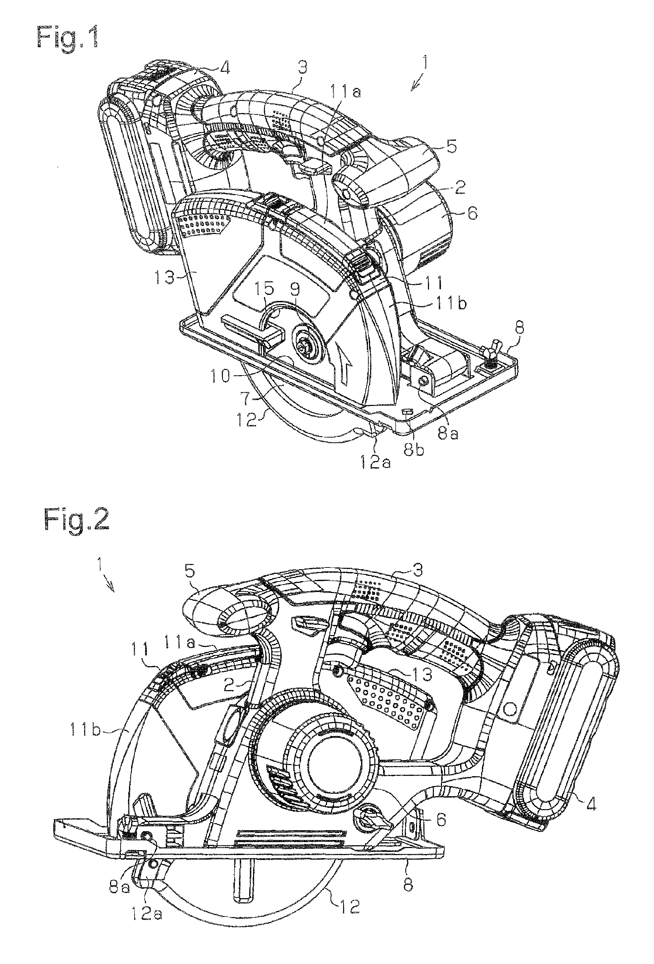

As illustrated in Figs. 1 and 2, a power circular saw 1 includes a main body 2, a circular saw blade 7, a plate-like base 8, and a protection cover 11 that covers an upper portion of the circular saw blade 7. The circular saw blade 7 is coupled in a rotatable manner to a rotation shaft 9, which is orthogonal to a plane (rotational flat plane) of the circular saw blade 7. The rotation shaft 9 is an output shaft of a driving system including a motor 6. In the illustrated example, the circular saw blade 7 and the motor 6 are located at opposite sides of the main body 2.

The main body 2 may include a curved bar-like longitudinal handle 3, which is arranged in parallel to the plane of the circular saw blade 7, a power supply unit 4, which is arranged at a rear end of the longitudinal handle 3 and which accommodates a battery (not illustrated), and a lateral handle 5, which is arranged at a front end of the longitudinal handle 3. In an illustrated example, the power circular saw 1 is a portable power circular saw.

The base 8 is coupled to a lower portion of the main body 2 by a pivot shaft 8a. The main body 2 pivotally rotates about the pivot shaft 8a. A front end of the base 8 includes a view port 8b, which may be a through hole. The view port 8b is, for example, rhomboidal as viewed from above. The view port 8b allows an operator to visually check, for example, a cutting position mark or a cutting guide line marked in ink on a workpiece. The plane of the circular saw blade 7, or a saw-tooth line of the circular saw blade 7, and the view port 8b are arranged on the same plane that is orthogonal to the rotation shaft 9.

When the circular saw blade 7 is fixed to the rotation shaft 9, a portion of the circular saw blade 7 projects downwardly from an opening 10 that is located between the front and rear ends of the base 8. The plane of the circular saw blade 7 is generally parallel to a longitudinal axis (longitudinal handle 3) of the main body 2. The pivoting of the main body 2 about the pivot shaft 8a relative to the base 8 adjusts the projecting amount of the circular saw blade 7 from the opening 10.

The saw-tooth line along the circumference of the circular saw blade 7 is covered by an upper cover 11 and a lower cover 12. A dust case 13 is arranged at a rear side of the upper cover 11, which covers an upper side of the circular saw blade 7. The dust case 13 collects sawdust produced when the circular saw blade 7 performs cutting.

The upper cover 11 includes a top cover 11a and a front cover 11 b, which is located at a front side of the top cover 11a and projects toward the front end of the base 8. The front cover 11b functions as a guide portion. The top cover 11a has a low-profile, is box-shaped, and includes an internal void and a lower opening. Aside surface of the upper cover 11 includes a semicircular opening 15 at a location corresponding to the rotation shaft 9. The upper cover 11 is supported integrally with the circular saw blade 7 by the main body 2. The upper cover 11 accommodates the upper portion of the circular saw blade 7, more specifically, the side surface and the saw-tooth line of the circular saw blade 7 that is located above the base 8.

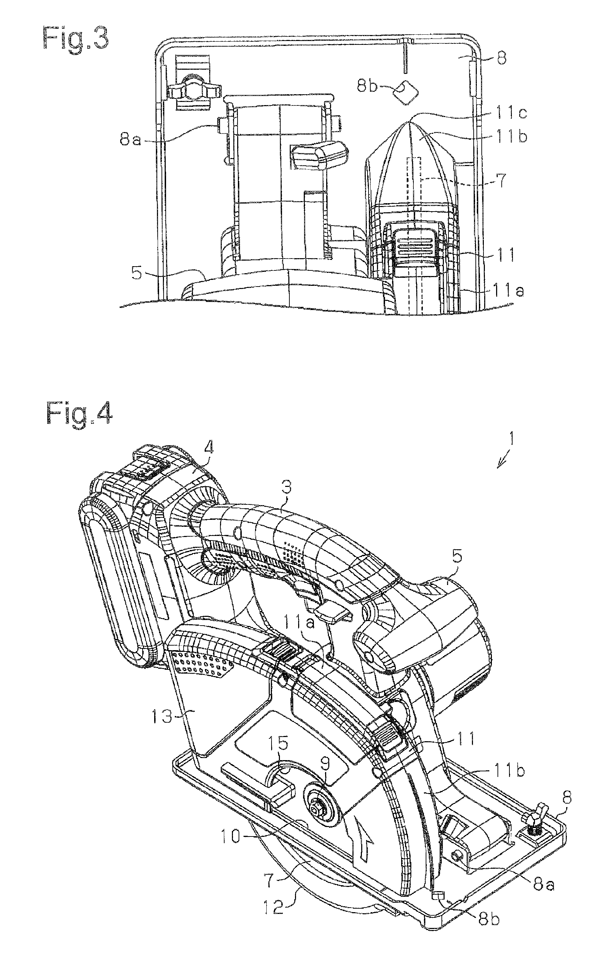

As illustrated in Fig. 3, the front cover 11b includes a central portion 11c, which serves as a foremost end or a pointed tip and which is directed to the front end of the base 8. For example, the front cover 11b includes a tapered nose. The tapered nose includes an inverted triangular front panel and two side surfaces sandwiching the front panel. A lower end of the inverted triangular front panel functions as the foremost end or the pointed tip of the front cover 11 b. The tapered nose of the front cover 11b is V-shaped at an acute angle. The central portion 11c of the front cover 11 b is aligned with the plane, or the saw-tooth line, of the circular saw blade 7. Thus, the central portion 11 c of the front cover 11 b and the plane, or the saw-tooth line, of the circular saw blade 7 are arranged on the same plane that is orthogonal to the rotation shaft 9.

Preferably, the central portion 11c is in contact with or adjacent to an upper surface of the base 8. In an illustrated example, the central portion 11c of the front cover 11b is directed to the view port 8b (preferably, center, one angle, or diagonal line of the view port 8b). Preferably, the front cover 11b is formed by a transparent member.

The lower cover 12 may be an arcuate member that includes a U-shaped groove. The U-shaped groove of the lower cover 12 accommodates at least a portion of the circumference of the circular saw blade 7. The lower cover 12 is supported integrally with the circular saw blade 7 by the main body 2. The lower cover 12 accommodates a lower portion of the circular saw blade 7, more specifically, the saw-tooth line of the circular saw blade 7 that is located below the base 8.

The lower cover 12 may expose the circumference of the circular saw blade 7 in the vicinity of the front end of the base 8. The circular saw blade 7 is configured to cut a workpiece with the saw-tooth line (cutting portion) of the circular saw blade 7 that is exposed in the lower cover 12.

First, an operator holds the longitudinal handle 3 (and lateral handle 5) and positions the exposed saw-tooth line (cutting portion) of the circular saw blade 7 in contact with or adjacent to a workpiece. Next, the operator rotates the circular saw blade 7 and moves the power circular saw 1 forward to process or cut the workpiece. In this description, "front side" indicates a direction in which the power circular saw 1 is moved to cut or process the workpiece while the base 8 is placed on a workpiece.

In the power circular saw 1, a workpiece is placed below the circular saw blade 7. The circular saw blade 7 (cutting portion) contacts a workpiece at a front side of the rotation shaft 9.

In the present embodiment, the lower cover 12 is pivotal about the rotation shaft 9, and a rear end of the lower cover 12 is movable into the upper cover 11. The lower cover 12, which is urged toward the front side by an elastic member (not illustrated), rotates so that a distal end 12a of the lower cover 12 moves toward the front end of the base 8. Thus, during a cutting operation, the distal end 12a of the lower cover 12 contacts a workpiece in the vicinity of the cutting portion. When pressed by the workpiece, the lower cover 12 pivots rearward. An operator may recognize the depth of a cut based on a pivot angle of the lower cover 12 or a location of the rear end of the lower cover 12 entering the upper cover 11.

A discharge portion (not illustrated) is arranged in a rear side of the top cover 11a of the upper cover 11. The discharge portion discharges sawdust, which is produced when the circular saw blade 7 performs cutting, out of the upper cover 11. In the present embodiment, the dust case 13, which covers the discharge portion, is arranged integrally with the upper cover 11.

In the present embodiment, the upper cover 11 has an outline that curves along the circumference of the circular saw blade 7. The circular saw blade 7 rotates about the rotation shaft 9 in a direction indicated by an arrow (Fig. 1) located on the side surface of the upper cover 11. In the upper cover 11, air flow is generated in correspondence with the rotation direction of the circular saw blade 7. Sawdust is drawn into the upper cover 11 by the air flow and discharged into the scrap case 13, which is located outside the upper cover 11. In the present embodiment, the scrap case 13 is attached in a removable manner to the rear side of the top cover 11a of the upper cover 11, where the discharge portion (not illustrated) is located.

The operation of the present embodiment will now be described.

When power is supplied from the power supply unit 4 to the motor 6, the motor 6 generates rotation. The driving power of the motor 6 is transmitted to the rotation shaft 9 directly or via a speed reduction unit to rotate the circular saw blade 7. The base 8 of the power circular saw 1 is placed on a workpiece and the power circular saw 1 is moved toward the front side to cut the workpiece.

The upper cover 11 includes the front cover 11b including the pointed tip, or the central portion 11c, that is directed toward the front side. The central portion 11c of the front cover 11b allows an operator to easily recognize the location of the plane, or the saw-tooth line, of the circular saw blade 7. As a result, the blade edge may be easily aligned with a workpiece.

The present embodiment has the advantages described below.
(1) The power circular saw 1 includes the circular saw blade 7 driven and rotated by the motor 6, the plate-like base 8 including the opening 10, through which the circular saw blade 7 extends, and the upper cover 11 covering the circular saw blade 7 above the base 8. The upper cover 11 includes the front cover 11 b, which is located at a position corresponding to the plane, or the saw-tooth line, of the circular saw blade 7 and projects toward the front end of the base 8. The front cover 11b functions as the guide portion that simplifies the alignment of the blade edge with a workpiece. The front cover 11b improves the alignment accuracy of the blade edge with a workpiece.
(2) The front cover 11b includes the tapered nose formed by two side surfaces of the upper cover 11. The central portion 11c, which is the foremost end or the pointed tip of the front cover 11 b, is aligned with the plane of the circular saw blade 7. This simplifies the alignment of the blade edge with a workpiece and improves the alignment accuracy of the edge with a workpiece.
(3) In some examples, the front cover 11b is formed by a transparent member. The transparent front cover 11b allows for the circular saw blade 7 to be visually checked. Also, the transparent front cover 11 b simplifies the alignment of the circular saw blade 7 with a workpiece and improves the alignment accuracy of the blade edge with a workpiece.

It should be apparent to those skilled in the art that the present invention may be embodied in many other specific forms without departing from the scope of the invention. Particularly, it should be understood that the present invention may be embodied in the following forms.

In the above embodiment, the front cover 11 b, which serves as the guide portion, includes the tapered nose. An upper end of the tapered nose has substantially the same width as that of the top cover 11 a. The front cover 11 b may be changed in shape.

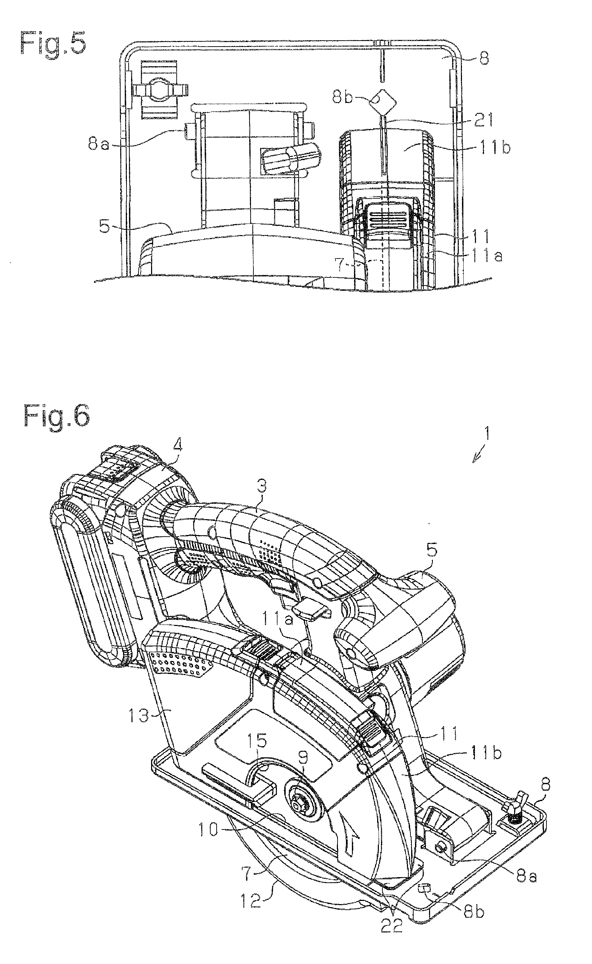

For example, in a first modified example illustrated in Figs. 4 and 5, the front cover 11 b includes a projection 21, which is located on an outer surface of the front cover 11b and extends toward the front end of the base 8. The projection 21 may be a plate that has a constant width and includes an end, which serves as a foremost end and is directed to the front end of the base 8. For example, when the projection 21 has the same thickness as that of the circular saw blade 7, the position of the plane or blade edge of the circular saw blade 7 may be easily recognized. In the example of Fig. 5, the projection 21 extends to the view port 8b of the base 8. This allows an operator to process or cut a workpiece while visually checking a cutting position mark or a cutting guide line of the workpiece through the view port 8b.

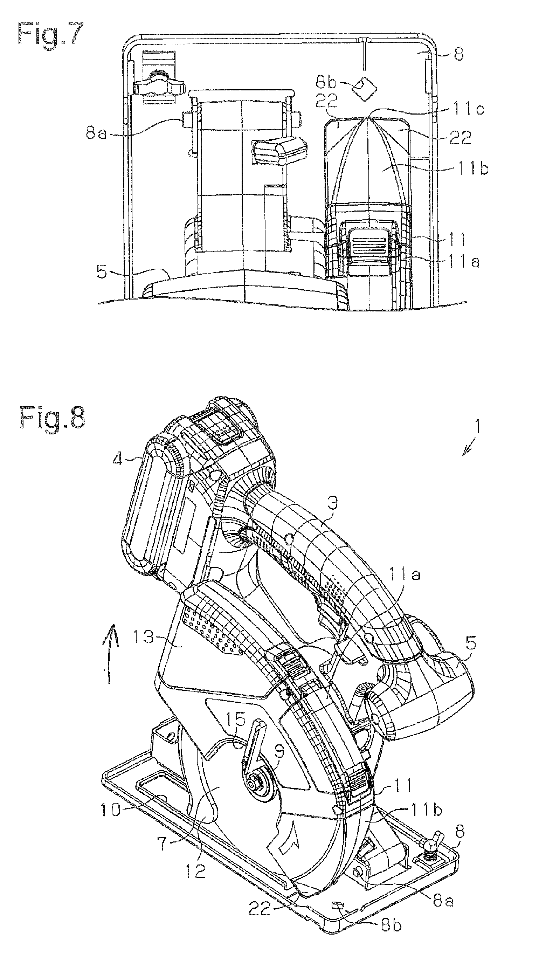

As illustrated in Fig. 8, for example, when the main body 2 pivots about the pivot shaft 8a relative to the base 8, the circular saw blade 7 and the upper cover 11 pivot together with the main body 2. This enlarges a gap between the front cover 11b and the base 8. Sawdust may be released through the opening 10 and the enlarged gap. In a second example illustrated in Figs. 6 to 8, the upper cover 11 includes a flange 22 in the vicinity of the pivot shaft 8a. The flange 22 extends from the front cover 11b to the pivot shaft 8a and reduces the dispersed sawdust.

The present examples and embodiments are to be considered as illustrative and not restrictive, and the invention is not to be limited to the details given herein, but may be modified within the scope and equivalence of the appended claims.

## Claims

1. A power circular saw (1) comprising:
a circular saw blade (7) rotated by a motor (6);
a plate-like base (8) including a front end, a rear end, and an opening (10) located between the front end and the rear end, wherein the opening (10) receives a portion of the circular saw blade (7); and
a protection cover (11) covering a saw-tooth line of the circular saw blade (7) above the base (8),
the power circular saw (1) being **characterized in that** the protection cover (11) includes a guide portion (11 b) that is located at a position corresponding to a plane or the saw-tooth line of the circular saw (7) and projects toward the front end of the base (8).

2. The power circular saw (1) according to claim 1, wherein the guide portion (11 b) includes a tapered nose located between two side surfaces of the protection cover (11).

3. The power circular saw (1) according to claim 1, wherein
the base (8) includes a view port (8b) used to visually check a cutting position,
the guide portion (11 b) is a projection that is aligned with the saw-tooth line of the circular saw blade (7) or the plane of the circular saw blade (7), and
the projection extends to the view port (8b) of the base (8).

4. The power circular saw (1) according to any one of claims 1 to 3, wherein
the protection cover (11) is pivotal relative to the base (8) about a pivot shaft (8a) that is parallel to a plane of the base (8) and orthogonal to the plane of the circular saw blade (7), and
the protection cover (11) includes a flange (22) extending from the guide portion (11b) toward the pivot shaft (8a) in the vicinity of the pivot shaft (8a).

5. A power circular saw (1) comprising:
a circular saw blade (7) rotated by a motor (6);
a plate-like base (8) including a front end, a rear end, and an opening (10) located between the front end and the rear end, wherein the opening (10) receives a portion of the circular saw blade (7); and
a protection cover (11) covering a saw-tooth line of the circular saw blade (7) above the base (8),
the power circular saw (1) being **characterized in that** the protection cover (11) includes a foremost end (11c), wherein the foremost end (11c) is in contact with or adjacent to an upper surface of the base (8), directed to the front end of the base (8), and aligned with a plane or the saw-tooth line of the circular saw blade (7).

6. The power circular saw (1) according to claim 5, wherein the protection cover (11) includes a V-shaped nose (11 b), and the foremost end (11c) includes a pointed tip of the V-shaped nose (11b).

7. The power circular saw (1) according to claim 5, wherein the foremost end (11c) includes an end of a plate-like projection (21) that projects from the protection cover (11) in parallel to the plane of the circular saw blade (7).

8. The power circular saw (1) according to any one of claims 5 to 7, wherein
the base (8) includes a view port (8b) used to visually check a cutting position, and
the foremost end (11 c) is directed to a center of the view port (8b).

9. The power circular saw (1) according to any one of preceding claims, wherein the power circular saw (1) is a portable power circular saw (1) and further includes a power supply unit that accommodates a battery.
